# EUROPÄISCHE PATENTSCHRIFT

(11) **EP 3 496 995 B1**
(45) Veröffentlichungstag und Bekanntmachung des Hinweises auf die Patenterteilung: **03.03.2021**
(21) Anmeldenummer: 17755102.5
(22) Anmeldetag: 08.08.2017
(51) Int. Cl.: B62D 5/00, B62D 5/04, B62D 6/00

(54) **REGELUNG EINES STEER-BY-WIRE-LENKSYSTEMS**
CONTROLLING A STEER-BY-WIRE STEERING SYSTEM
RÉGULATION D'UN SYSTÈME DE DIRECTION À COMMANDE PAR CÂBLE ÉLECTRIQUE

(30) Priorität: 10.08.2016 DE 102016009684
(43) Veröffentlichungstag der Anmeldung: 19.06.2019
(73) Patentinhaber: thyssenkrupp Presta AG, 9492 Eschen (LI); Thyssenkrupp AG, 45143 Essen (DE)
(72) Erfinder: POLMANS, Kristof, 6464 Tarrenz (AT)
(74) Vertreter: thyssenkrupp Intellectual Property GmbH
(86) Internationale Anmeldenummer: PCT/EP2017/070079
(87) Internationale Veröffentlichungsnummer: WO 2018/029198

(56) Entgegenhaltungen:
- DE-A1- 10 302 268

## Beschreibung

Die vorliegende Erfindung betrifft ein Verfahren zur Steuerung eines Steer-by-Wire-Lenksystems für Kraftfahrzeuge mit den Merkmalen des Oberbegriffs des Anspruchs 1 und ein Steer-by-Wire-Lenksystem mit den Merkmalen des Oberbegriffs des Anspruchs 8.

Bei Steer-by-Wire-Lenksystemen ist die Stellung der gelenkten Räder nicht direkt mit dem Lenkeingabemittel, beispielsweise einem Lenkrad, gekoppelt. Es besteht eine Verbindung zwischen dem Lenkrad und den gelenkten Rädern über elektrische Signale. Der Fahrerlenkwunsch wird von einem Lenkwinkelsensor abgegriffen, und in Abhängigkeit von dem Fahrerlenkwunsch wird über einen Lenksteller die Stellung der gelenkten Räder geregelt. Eine mechanische Verbindung zu den Rädern ist nicht vorgesehen, sodass nach Betätigung des Lenkrads keine unmittelbare Kraft-Rückmeldung an den Fahrer übermittelt wird. Allerdings ist eine entsprechend angepasste Rückmeldung, beispielsweise beim Parken oder bei einer Geradeausfahrt, bei der ein der Fahrzeugreaktion angepasstes, je nach Fahrzeughersteller unterschiedliches Lenkmoment als Kraft-Rückmeldung gewünscht ist vorgesehen. Bei einer Kurvenfahrt wirken Reaktionskräfte als Querkräfte auf das Lenkgetriebe, welche der Feedback-Aktuator in Form eines der Lenkrichtung entgegengesetzten Moments nachbildet. Der Fahrer erfährt ein dadurch vorgebbares Lenkgefühl. Um bei Steer-by-Wire-Lenkungen die Rückwirkungen der Straße auf das Lenkrad zu simulieren, ist es notwendig, am Lenkrad bzw. der Lenksäule einen Feedback-Aktuator (FBA) vorzusehen, welcher in Abhängigkeit von den gewünschten Rückwirkungen der Lenkhandhabe ein Lenkgefühl aufprägt. Der Fahrer muss diesem Moment ein entsprechendes Haltemoment entgegenbringen, damit der Lenkeinschlag gesteuert werden kann. Insbesondere während einer Kurvenfahrt soll häufig ein Gegenmoment erzeugt werden, um dem Fahrer das bei konventionellen Lenksystemen gewohnte Lenkempfinden nachzubilden.

Fällt der Feedback-Aktuator aus, liegt ein Fehlerfall vor und es kommt schlagartig zu einem Abfall des vom Feedback-Aktuator generierten Drehmoments, während das vom Fahrer aufgebrachte Haltemoment weiter am Lenkrad anliegt. Dadurch entsteht möglicherweise eine schnelle, unbeabsichtigte Bewegung am Lenkrad in Lenkrichtung, welche von der Steer-by-Wire-Lenkung als Lenkeinschlag aufgefasst wird und zum stärkeren Einschlagen der Räder in der Kurve führt und dadurch eine unerwünschte Fahrzeugreaktion auslöst. Liegt kein Fehlerfall vor, wird der Zustand als Normalfall bezeichnet.

Herkömmlicherweise wird eine solche unerwünschte Fahrzeugreaktion unterbunden, in dem eine Rückfallebene vorgesehen ist, die bei Ausfall des Feedback-Aktuators aktiviert wird. Eine hydraulische Rückfallebene ist beispielsweise aus DE 198 38 490 A1 bekannt. Im Notlenkbetrieb, beispielsweise bei Störungen oder Ausfall eines Lenkstellers, Gebers oder des Regelsystems, wird die Wirkverbindung zwischen Lenkrad und den gelenkten Rädern durch einen geschlossenen Hydraulikkreis hergestellt. Als nachteilig erweist sich ein hydraulischer Notbetrieb durch ungewohntes Lenkgefühl, die Gefahr von Leckagen und Ölverlusten sowie durch die Temperaturabhängigkeit der Hydrauliköle.

Aus der DE 103 02 268 A1, die die Merkmale der Oberbegriffe der unabhängigen Ansprüche 1 und 8 offenbart, ist ein Steer-by-Wire-Lenksystem und ein Verfahren zur Steuerung eines Steer-by-Wire-Lenksystems mit den eingangs genannten Merkmalen bekannt. Nachteilig dabei ist, dass ein Fehlerfall des Feedback-Aktuators zu einer Überreaktion des Fahrers führen kann, wodurch ein potentiell gefährlicher Fahrzustand auftreten kann.

Es ist deshalb Aufgabe der vorliegenden Erfindung, ein Verfahren zur Steuerung eines Steer-by-Wire-Lenksystems für Kraftfahrzeuge anzugeben, dass zu einem verbesserten Lenkverhalten im Fehlerfall führt. Weiter soll ein Steer-by-Wire-Lenksystem angegeben werden, dass ein verbessertes Lenkverhalten ermöglicht.

Diese Aufgabe wird von einem Verfahren zur Steuerung eines Steer-by-Wire-Lenksystems mit den Merkmalen des Anspruchs 1 und einem Steer-by-Wire-Lenksystem mit den Merkmalen des Anspruchs 8 gelöst. Weitere vorteilhafte Ausbildungen der Erfindung sind den Unteransprüchen zu entnehmen.

Demnach ist ein Verfahren zur Steuerung eines Steer-by-Wire-Lenksystems für ein Kraftfahrzeug vorgesehen, umfassend einen auf die gelenkten Räder wirkenden elektronisch regelbaren Lenksteller, eine Ansteuereinheit, einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt, eine Signalübertragung, die den Fahrerwunsch an die Ansteuereinheit übermittelt, wobei die Ansteuereinheit den Lenksteller ansteuert, um den Fahrerwunsch in eine Auslenkung der gelenkten Räder zu transformieren, wobei eine Feedback-Aktuator-Monitoreinheit vorgesehen ist, die eine Fehlfunktion des Feedback-Aktuators als Fehlerfall detektiert, wobei im Fehlerfall des Feedback-Aktuators folgende Verfahrensschritte vorgesehen sind:
- das Feedback-Signal wird an das Lenkeingabemittel innerhalb einer ersten Zeitspanne kontinuierlich auf Null reduziert, sowie
- die Signalübertragung wird reduziert und/oder
- die Signalübertragung wird für eine zweite Zeitspanne unterbrochen und/oder
- der in der Signalübertragung übermittelte Fahrerwunsch wird nur als reduzierte Größe in die Transformation zur Bestimmung der Änderung der Auslenkung der Räder einbezogen und/oder
- der in der Signalübertragung übermittelte Fahrerwunsch wird für die zweite Zeitspanne nicht in die Transformation zur Bestimmung der Änderung der Auslenkung der Räder einbezogen.

Bevorzugt ist die zweite Zeitspanne kürzer als die erste Zeitspanne.

Eine derartige Regelung kann es für manche Fälle ermöglichen, dass nach Eintreten des Fehlerfalls des Feedback-Aktuators der Fahrer am Lenkeingabemittel weiterhin eine Kraft-Rückmeldung über die Rückwirkungen der Straße erhält. Diese Kraft-Rückmeldung nimmt bevorzugt über die Zeit ab und nähert sich Null an, sodass nach Ablauf der ersten Zeitspanne dem Fahrer ein kaum spürbares Lenkgefühl aufgeprägt wird und der Feedback-Aktuator abgeschaltet wird. Für den zeitlichen Ablauf erweisen sich bezüglich der ersten Zeitspanne Zeiträume im Bereich von 0 Sekunden bis zu 5 Sekunden nach Eintritt des Fehlerfalls als zweckmäßig. Weiter bevorzugt erweisen sich erste Zeitspannen von 0 bis zu 10 Sekunden als vorteilhaft. Während das Feedback-Signal reduziert wird, geht der vom Fahrer aufgeprägte Lenkwinkel und/oder das vom Fahrer eingeprägte Haltemoment nur noch partiell, oder nur mit gegenüber dem Normallfall reduziertem Einfluss, in die Regelung ein, sodass eine Überreaktion durch den Fahrer gedämmt werden kann.

Alternativ - je nach Fahrsituation und/oder Art und Weise des Fehlerzustandes des Feedback-Aktuators - erfolgt eine Unterbrechung der Übertragung des vom Fahrer aufgeprägten Lenkwinkels und/oder des vom Fahrer aufgebrachten Haltemoments für eine zweite Zeitspanne, sodass eine Überreaktion durch den Fahrer nicht unmittelbar übertragen wird.

Für den zeitlichen Ablauf erweisen sich bezüglich der zweiten Zeitspanne Zeiträume im Bereich von 0 Sekunden bis zu 2 Sekunden als zweckmäßig. Weiter bevorzugt sind zweite Zeitspannen von 0 bis zu 3 Sekunden. Auch Zeitspannen von 0 bis 4 Sekunden oder 5 Sekunden oder 6 Sekunden können sich als vorteilhaft erweisen zur Unterbrechung des vom Fahrer aufgebrachten Lenkinputs (Lenkwinkel und/oder Lenkmoment). Auch die Darstellung der zweiten Zeitspanne bis 10 Sekunden kann sich als zweckmäßig erweisen.

Bevorzugt sind weiter folgende Verfahrensschritte vorgesehen:
- Ermitteln eines definierten Lenkwinkelstatus auf Basis des während der Fahrt vom Fahrer beaufschlagten Lenkwinkels und einer Lenkwinkelgeschwindigkeit,
- Übertragen des definierten Lenkwinkelstatus an die Ansteuereinheit und
- Ansteuern des Lenkstellers auf Basis des definierten Lenkwinkelstatus.

Der definierte Lenkwinkelstatus beschreibt einen Zeitraum, in welchem die vom Fahrer während der Fahrt aufgeprägten Lenkbefehle, das heißt Lenkwinkel, Lenkwinkelgeschwindigkeit und/oder Lenkwinkelbeschleunigung, bestimmt und gespeichert werden. Es ist weiter bevorzugt, wenn der definierte Lenkwinkelstatus in einen ersten Lenkwinkelstatus und einen zweiten Lenkwinkelstatus unterteilt wird. Der erste Lenkwinkelstatus ermittelt die vor dem Fehlerfall, das heißt im Normalfall, während eines Zeitraums aufgeprägten Lenkwinkel, das heißt einen ersten Lenkwinkelverlauf, sowie eventuell weitere das Lenkverhalten beschreibende Größen. Der zweite Lenkwinkelstatus ermittelt die nach dem Eintritt des Fehlerfalls während eines Zeitraums aufgeprägten Lenkwinkel, das heißt einen zweiten Lenkwinkelverlauf, sowie eventuell weitere das Lenkverhalten beschreibende Größen. Besonders bevorzugt wird aus dem ersten Lenkwinkelstatus eine fortlaufende Ansteuerung des Lenkstellers bereitgestellt. Der zweite Lenkwinkelstatus wird bevorzugt nicht für die Ansteuerung des Lenkstellers herangezogen, um eine fehlerbehaftete Auslenkung der Räder zu unterbinden.

Es ist aber denkbar und möglich, den zweiten Lenkwinkelstatus zur Ansteuerung des Lenkstellers in reduzierter Form mit heranzuziehen. Dies kann beispielsweise dann erfolgen, wenn der Fehlerfall genauer eingegrenzt werden kann und entsprechend erkannt werden kann, dass gewisse eingeschränkte Funktionen des Feedback-Aktuators noch vorhanden sind.

Bevorzugt sind weiter folgende Verfahrensschritte vorgesehen:
- Messen und Speichern einer Fahrzeuggeschwindigkeit und/oder
- Messen und Speichern des gelenkten Winkels der gelenkten Räder und/oder
- Messen und Speichern einer Position des Lenkstellers und/oder
- Messen oder Schätzen einer Kraft des Lenkstellers, wobei die Kraft des Lenkstellers gespeichert wird ,
- Wobei die gespeicherten Werte für eine dritte Zeitspanne gespeichert werden und
- Ansteuern des Lenkstellers auf Basis:
- Der gespeicherten Fahrzeuggeschwindigkeit und/oder des gespeicherten gelenkten Winkels und/oder der gespeicherten Position des Lenkstellers und/oder der gespeicherten oder geschätzten Kraft des Lenkstellers.

Diese Größen ermöglichen die Bestimmung des Fahrzustandes des Fahrzeugs oder des Lenkverhaltens des Fahrzeugs. Als das Lenkverhalten des Fahrzeugs und/oder den Fahrzustand beschreibende Größen können zudem beispielsweise die Fahrgeschwindigkeit des Kraftfahrzeugs, die Beschleunigung des Kraftfahrzeugs, die Gierrate, der Ackermannwinkel, die Vorspur und/oder der Nachlauf dienen.

Es ist aber auch denkbar und möglich für eine verbesserte Ermittlung des Fahrzustandes oder des Lenkverhaltens des Fahrzeugs die durch den Fahrer induzierten Lenkbefehle, wie beispielsweise den Lenkwinkel, die Lenkwinkelgeschwindigkeit, die Lenkwinkelbeschleunigung und/oder eine am Lenkrad durch den Fahrer aufgeprägte Haltekraft heranzuziehen.

Auf Basis der ermittelten Größen kann der Lenksteller sowohl im Normalfall als auch im Fehlerfall weiter angesteuert werden und lenkt die Räder in einer bevorzugten Weise unabhängig von den Signalen der Feedback-Aktuator-Monitoreinheit und daher unabhängig vom Fahrerwunsch. Die ermittelten Größen werden über eine Signalübertragung an die Feedback-Aktuator-Monitoreinheit übermittelt, sodass sowohl im Normalfall als auch im Fehlerfall ein Feedback-Signal an das Lenkeingabemittel übertragen wird. Für den zeitlichen Ablauf erweisen sich bezüglich der dritten Zeitspanne Zeiträume von 0 Sekunden bis 15 Sekunden als zweckmäßig.

In einer vorteilhaften Ausführung sind weiter folgende Verfahrensschritte vorgesehen:
Im Fehlerfall:
- Bestimmen des Feedback-Signals und/oder des Fahrerwunsches auf Basis des vor dem Fehlerfall ermittelten Lenkwinkelstatus und/oder der gemessenen Fahrzeuggeschwindigkeit (v) und/oder des gemessenen gelenkten Winkels der gemessenen Position des Lenkstellers und/oder der gemessenen oder geschätzten Kraft des Lenkstellers.

Dadurch kann gewährleistet werden, dass in bestimmten Fällen auch bei einem Fehlerfall des Feedback-Aktuators oder der Signalverarbeitung oder Signalübertragung in Bezug zum Feedback-Aktuator, dem Fahrer ein gewisses Fahrgefühl und die Rückwirkungen der Straße übermittelt werden, wodurch eine Überreaktion seitens des Fahrers eingedämmt werden kann. Mit Vorzug speichert die Ansteuereinheit den vor dem Fehlerfall ermittelten Lenkwinkelstatus, die Informationen des Lenkstellers und Eingangsgrößen, welche nach Eintritt des Fehlerfalls in die Ansteuerung der Räder übertragen werden können.

In einer bevorzugten Ausführungsform wird nach Ablauf der ersten Zeitspanne der Feedback-Aktuator über die Ansteuereinheit angesteuert. Dadurch wird dem Fahrer auch in der Fehlfunktion des Feedback-Aktuators ein Fahrgefühl simuliert, wodurch abrupte Lenkbewegungen des Fahrers reduziert werden können, soweit das in dem jeweiligen Fehlerzustand noch möglich ist.

Für den Fall, dass der Fahrzustand des Fahrzeugs einer Kurvenfahrt entspricht, wird der Lenksteller im Fehlerfall auf Basis des vor dem Fehlerfall ermittelten Lenkwinkelstatus und/oder des im Fehlerfall gemessenen Lenkwinkelstatus und/oder des vor dem Fehlerfall ermittelten Lenkverhaltens des Fahrzeugs angesteuert. Als Kurvenfahrt ist eine Bewegung des Kraftfahrzeugs mit einem Lenkwinkel ungleich dem Wert Null bei gleichzeitigem Auftreten von Querkräften, deren Größe nicht mehr zu vernachlässigen ist, zu verstehen. Im Fall des Einparkens ist die Fahrgeschwindigkeit hingegen so klein, dass die Querkräfte vernachlässigt werden können. Im Fall, dass der Fehlerfall eingetreten ist und gerade ein Einparken erfolgt, können Abstandssensoriken, Einparkhilfen und/oder Kamera-Signale zur Ansteuerung des Lenkstellers herangezogen werden.

Weiterhin ist ein Steer-by-Wire -Lenksystem für ein Kraftfahrzeug vorgesehen, umfassend:
einen auf die gelenkten Räder wirkenden elektronisch regelbaren Lenksteller, eine Ansteuereinheit, einen Feedback-Aktuator, der über ein Lenkeingabemittel von einem Fahrer mit einem Fahrerwunsch für einen Lenkwinkel beaufschlagt werden kann und ein Feedback-Signal an das Lenkeingabemittel als Reaktion auf den Fahrerwunsch und einen Fahrzustand des Kraftfahrzeugs ausgibt, eine Einrichtung zur Signalübertragung, die den Fahrerwunsch an die Ansteuereinheit übermittelt, wobei die Ansteuereinheit den Lenksteller ansteuert, um den Fahrerwunsch in eine Auslenkung der gelenkten Räder zu transformieren, wobei eine Feedback-Aktuator-Monitoreinheit vorgesehen ist, die den Feedback-Aktuator überwacht und eine Fehlfunktion des Feedback-Aktuators als Fehlerfall detektiert, wobei im Fehlerfall die Feedback-Aktuator-Monitoreinheit dazu eingerichtet ist, das Feedback-Signal an das Lenkeingabemittel innerhalb einer ersten Zeitspanne kontinuierlich auf Null zu reduzieren, sowie die Einrichtung zur Signalübertragung dazu eingerichtet ist, die Signalübertragung zwischen Lenkeingabemittel und Lenksteller zu reduzieren und/oder die Signalübertragung für eine zweite Zeitspanne zu unterbrechen und/oder den in der Signalübertragung übermittelten Fahrerwunsch nur als reduzierte Größe zu übertragen und/oder den in der Signalübertragung übermittelten Fahrerwunsch in die Transformation zur Bestimmung der Änderung der Auslenkung der Räder in der Ansteuereinheit zu übertragen.

Bevorzugt wirkt der Lenksteller mittels eines Zahnstangen-Lenkgetriebes auf die gelenkten Räder.

Eine bevorzugte Ausführungsform der Erfindung wird nachfolgend anhand der Zeichnungen näher erläutert. Gleichartige oder gleichwirkende Bauteile werden in den Figuren mit denselben Bezugszeichen bezeichnet. Es zeigen:
- Fig. 1:: eine schematische Darstellung eines Steer-by-Wire-Lenksystems,
- Fig. 2:: ein Blockdiagramm einer Steuerung eines Feedback-Aktuators des Steer-by-Wire-Lenksystems, sowie
- Fig. 3 und 4:: verschiedene Darstellungen des zeitlichen Ablaufs des Steuerverfahrens bei Eintritt eines Fehlerfalls.

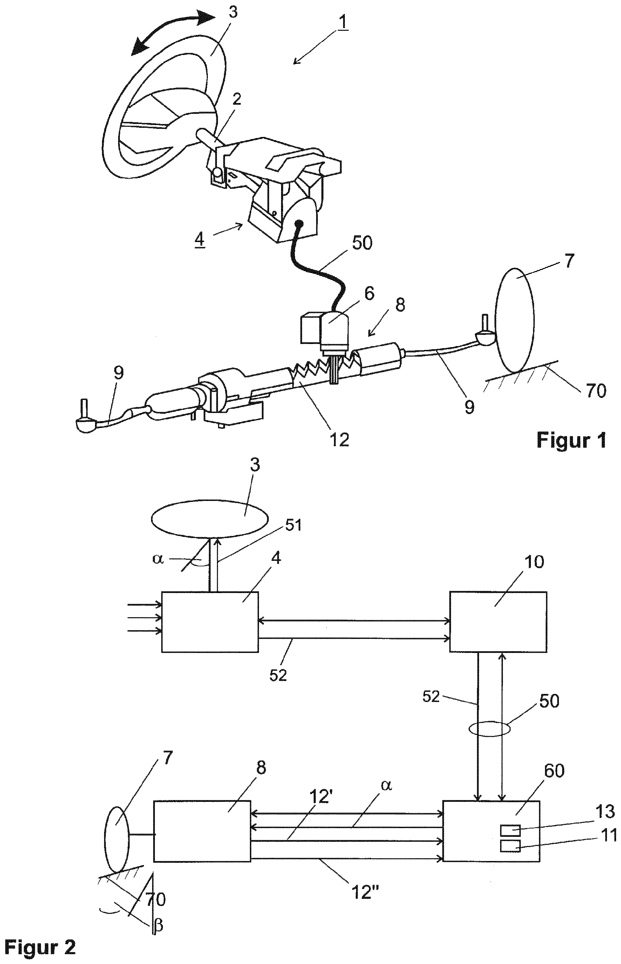

In der Figur 1 ist ein Steer-by-Wire-Lenksystem 1 gezeigt. An einer Lenkwelle 2 ist ein nicht dargestellter Drehwinkelsensor angebracht, welcher das durch Drehen eines Lenkeingabemittels 3, welches im Beispiel als Lenkrad ausgebildet ist, aufgebrachten Fahrerlenkwinkel erfasst. Es kann aber zusätzlich auch ein Lenkmoment erfasst werden. Als Lenkeingabemittel 3 kann ein Joy-Stick dienen. Des Weiteren ist an der Lenkwelle 2 ein Feedback-Aktuator 4 angebracht, welcher dazu dient, die Rückwirkungen von der Fahrbahn auf das Lenkrad 3 zu simulieren und somit dem Fahrer eine Rückmeldung über das Lenk- und Fahrverhalten des Fahrzeugs zu geben. Der Fahrerlenkwunsch wird über den vom Drehwinkelsensor gemessenen Drehwinkel der Lenkwelle 2 über Signalleitungen an eine Feedback-Aktuator-Monitoreinheit 10 übertragen, wie dies in der Figur 2 veranschaulicht ist. Die Feedback-Aktuator-Monitoreinheit 10 überträgt den Fahrerlenkwunsch an die Ansteuereinheit 60. Die Feedback-Aktuator-Monitoreinheit 10 übernimmt bevorzugt auch die Ansteuerung des Feedback-Aktuators 4. Die Feedback-Aktuator-Monitoreinheit 10 kann auch integral mit der Ansteuereinheit 60 ausgebildet sein. Die Ansteuereinheit 60 steuert in Abhängigkeit von dem Signal des Drehwinkelsensors sowie weiteren Eingangsgrößen einen elektrischen Lenksteller 6 an, welcher die Stellung der gelenkten Räder 7 steuert. Der Lenksteller 6 wirkt über ein Lenkstangen-Lenkgetriebe 8, wie beispielsweise einem Zahnstangen-Lenkgetriebe, sowie über Spurstangen 9 und anderen Bauteilen mittelbar auf die gelenkten Räder 7.

Figur 2 zeigt eine Steuerung des Feedback-Aktuators 4. Der Feedback-Aktuator 4 empfängt in einem Normalfall Signale unter anderem von dem Drehwinkelsensor, der den Lenkwinkel a, die Lenkwinkelbeschleunigung und die Lenkwinkelgeschwindigkeit misst und speichert. Der Feedback-Aktuator 4 kommuniziert mit einer Feedback-Aktuator-Monitoreinheit 10, die den Feedback-Aktuator 4 steuert. Die Feedback-Aktuator-Monitoreinheit 10 empfängt von einer Ansteuereinheit 60 des Lenkstellers 6 den Ist-Radlenkwinkel β der gelenkten Räder 7, sowie weitere Größen, die die Ansteuereinheit 60 ermittelt hat. Eine Straßenradwinkelberechnungseinheit 11 bestimmt den Ist-Radlenkwinkel β der gelenkten Räder 7 mittels einer an der Zahnstange 12 gemessenen Zahnstangenposition 12". In einer Einheit 13 in der Ansteuerungseinheit 60 wird eine Zahnstangenkraft mittels bekannter Verfahren gemessen oder geschätzt. Weiterhin empfängt die Ansteuerungseinheit 60 fahrerseitige Lenkbefehle, wie den Lenkwinkelstatus. Die aufgezeichneten Werte werden während einer dritten Zeitspanne t3 eingespeichert.

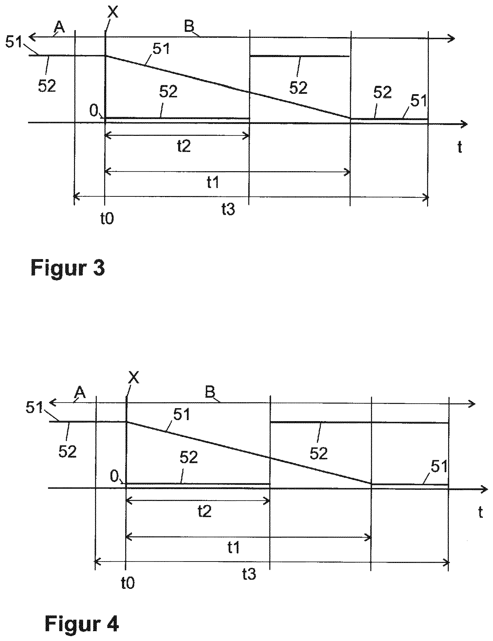

In den Figuren 3 und 4 sind verschiedene Szenarien für den zeitlichen Ablauf der Behandlung eines Feedback-Signal 51 und eines Fahrerwunsches 52 zur Ansteuerung des Lenkstellers 6 bei Eintreten eines Fehlerfalls X dargestellt.

Entsprechend Figur 3 erfolgt die Lenkungssteuerung während des Normalfalls A mit der Ausgabe des Feedback-Signal 51 zu 100%, wie vom Feedback Aktuator normal vorgegeben und der Fahrerwunsch 52 wird zu 100% an die Ansteuereinheit 60 über die Signalleitung 50 übertragen, entsprechend dem vom Fahrer in den Feedback-Aktuator 4 eingeprägten Fahrerlenkwunsches. Nach dem Eintritt eines Fehlerfalls X zum Zeitpunkt t0 des Feedback-Aktuators 4 während eines Fahrzustands B wird das Feedback-Signal 51 an die Lenkhandhabe 3, im Beispiel kontinuierlich, reduziert und bei Erreichen eines Schwellenwerts nach Ablauf der ersten Zeitspanne t1 schaltet die Feedback-Aktuator-Monitoreinheit 10 den Feedback-Aktuator 4 ab, so dass das Feedback-Signal 51 den Wert 0 erreicht. Der Fahrer bekommt innerhalb dieser ersten Zeitspanne t1 weiterhin eine, wenn auch reduzierte, Kraft-Rückmeldung übermittelt. Dadurch kann einer durch den Fahrer aufgebrachten Kraft bzw. einem unerwünschten Lenkwinkel auf die Lenkhandhabe 3, ausgelöst durch ein abruptes Wegfallen des Feedback-Signals 51, entgegengewirkt werden. Die Fehlfunktion des Feedback-Aktuators 4 übermittelt die Feedback-Aktuator-Monitoreinheit 10 über die Signalleitungen 50 an die Ansteuerungseinheit 60 des Lenkstellers 6, welcher den Fahrerlenkwunsch 52 dämpft, sodass der vom Fahrer eingeleitete Lenkwinkel α nur teilweise oder reduziert in die Berechnung zur Auslenkung der Räder 7 einfließt. Dadurch kann die Ansteuereinheit 60 mit einer gedämpften Kraft oder einem kleineren Moment dem zusätzlich aufgeprägten und unerwünschten Überlenken durch den Fahrer entgegenwirken.

Wie in Figur 3 und Figur 4 veranschaulicht, kann es auch notwendig sein, die Übertragung des Fahrerwunsches 52 für eine zweite Zeitspanne t2 zu stoppen, um ein Ausscheren des Fahrzeugs zu verhindern und damit die Sicherheit des Fahrzeugführers zu gewährleisten. Nach Ablauf der zweiten Zeitspanne t2 kann dann wie in Figur 3 veranschaulicht das vom Feedback-Aktuator 4 ausgegebene Signal für den Fahrerwunsch 52 wieder zu 100% an den Lenksteller 6 übermittelt werden, bis zum Ablauf der ersten Zeitspanne t1.

Entsprechend Figur 4 ist veranschaulicht, dass nach Ablauf der zweiten Zeitspanne t2 das Signal für den Fahrerwunsch 52 zu 100% an den Lenksteller 6 übermittelt wird, bis zum Ablauf der dritten Zeitspanne t3.

Wenn nach Ablauf der ersten Zeitspanne t1 kein Feedback-Signal mehr an das Lenkrad 3 übertragen wird, kann die Ansteuereinheit 60 anhand der Informationen aus dem gemessenen und gespeicherten gelenkten Winkel β, der Zahnstangenkraft 12' oder Zahnstangenposition 12", der vor dem Fehlerfall X übermittelten Lenkwinkelsignale, angesteuert werden.

Es ist auch denkbar und möglich, diese Ansteuerung auf Basis weiterer vor dem Eintreten des Fehlerfalls gemessener Größen, wie beispielsweise der Fahrzeuggeschwindigkeit v auszuführen. Dadurch kann beispielsweise eine Kurvenfahrt oder ein Parkvorgang zu Ende ausgeführt werden. Dies wird dadurch ermöglicht, dass die gemessenen Größen auch nach Eintritt des Fehlerfalls noch von der Ansteuereinheit abgefragt werden können.

Nach Ablauf der dritten Zeitspanne sollte das Fahrzeug angehalten sein, da danach ein sinnvolles Lenken kaum mehr möglich ist, falls der Feedback-Aktuator 4 nicht wieder in einen funktionsfähigen Betriebszustand gewechselt hat.

Bei einer teilweisen Funktionsfähigkeit des Feedback-Aktuators 4 ist es auch denkbar und möglich nach Ablauf der zweiten Zeitspanne t2, das Feedback-Signal 51 nicht auf den Wert "0", sondern auf einen niedrigen Wert zu reduzieren und/oder den Fahrerlenkwunsch 52 in nur reduziertem Maße an die Ansteuereinheit 60 für den Lenksteller 6 zu übertragen. Die Reduzierungen können Werte von 80% bis 20% der vollen 100%igen Signalstärke betragen.

## Patentansprüche

1. Verfahren zur Steuerung eines Steer-by-Wire-Lenksystems (1) für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel von einem Fahrer mit einem Fahrerwunsch (52) für einen Lenkwinkel (α) beaufschlagt werden kann und ein Feedback-Signal (51) an das Lenkeingabemittel als Reaktion auf den Fahrerwunsch (52) und einen Fahrzustand des Kraftfahrzeugs ausgibt,
- eine Signalübertragung, die den Fahrerwunsch (52) an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren,
- wobei eine Feedback-Aktuator-Monitoreinheit (10) vorgesehen ist, die eine Fehlfunktion des Feedback-Aktuators (4) als Fehlerfall (X) detektiert,
**dadurch gekennzeichnet, dass** im Fehlerfall (X) wird:
- das Feedback-Signal (51) an das Lenkeingabemittel (3) innerhalb einer ersten Zeitspanne (t1) kontinuierlich auf Null reduziert, sowie
- die Signalübertragung reduziert und/oder
- die Signalübertragung für eine zweite Zeitspanne (t2) unterbrochen und/oder
- der in der Signalübertragung übermittelte Fahrerwunsch (52) nur als reduzierte Größe in die Transformation zur Bestimmung der Änderung der Auslenkung der Räder (7) einbezogen und/oder
- der in der Signalübertragung übermittelte Fahrerwunsch (52) für die zweite Zeitspanne (t2) nicht in die Transformation zur Bestimmung der Änderung der Auslenkung der Räder (7) einbezogen.

2. Verfahren nach Anspruch 1, **dadurch gekennzeichnet, dass** weiter folgende Verfahrensschritte vorgesehen sind:
- Ermitteln eines definierten Lenkwinkelstatus auf Basis eines während der Fahrt vom Fahrer beaufschlagten Lenkwinkels (α) und einer Lenkwinkelgeschwindigkeit,
- Übertragen des definierten Lenkwinkelstatus an die Ansteuereinheit (60) und
- Ansteuern des Lenkstellers (6) auf Basis des definierten Lenkwinkelstatus.

3. Verfahren nach Anspruch 1 oder 2, **dadurch gekennzeichnet, dass** weiter folgende Verfahrensschritte vorgesehen sind:
- Messen und Speichern einer Fahrzeuggeschwindigkeit (v) und/oder
- Messen und Speichern des gelenkten Winkels (β) der gelenkten Räder und/oder
- Messen und Speichern einer Position (12) des Lenkstellers (6) und/oder
- Messen oder Schätzen einer Kraft des Lenkstellers (6), wobei die Kraft des Lenkstellers gespeichert wird ,
- Wobei die gespeicherten Werte für eine dritte Zeitspanne (t3) gespeichert werden und
- Ansteuern des Lenkstellers (6) auf Basis:
- Der gespeicherten Fahrzeuggeschwindigkeit (v) und/oder des gespeicherten gelenkten Winkels (β) und/oder der gespeicherten Position des Lenkstellers (6) und/oder der gespeicherten oder geschätzten Kraft des Lenkstellers (6).

4. Verfahren nach einem der vorangehenden Ansprüche 2 oder 3 , **dadurch gekennzeichnet, dass** im Fehlerfall (X) folgende Schritte vorgesehen sind:
- Bestimmen des Feedback-Signals und/oder des Fahrerwunsches auf Basis des vor dem Fehlerfall (X) ermittelten Lenkwinkelstatus und/oder der gemessenen Fahrzeuggeschwindigkeit (v) und/oder des gemessenen gelenkten Winkels der gemessenen Position des Lenkstellers und/oder der gemessenen oder geschätzten Kraft des Lenkstellers.

5. Verfahren nach einem der vorangehenden Ansprüche, **dadurch gekennzeichnet, dass** die zweite Zeitspanne kürzer ist als die erste Zeitspanne.

6. Verfahren nach einem der vorangehenden Ansprüche, **dadurch gekennzeichnet, dass**
- Nach Ablauf der ersten Zeitspanne (t1) der Feedback-Aktuator über die Ansteuereinheit (60) angesteuert wird.

7. Verfahren nach einem der vorangehenden Ansprüche, **dadurch gekennzeichnet, dass** der Fahrzustand des Kraftfahrzeugs einer Kurvenfahrt entspricht.

8. Steer-by-Wire -Lenksystem (1) für ein Kraftfahrzeug umfassend:
- einen auf die gelenkten Räder (7) wirkenden elektronisch regelbaren Lenksteller (6),
- eine Ansteuereinheit (60),
- einen Feedback-Aktuator (4), der über ein Lenkeingabemittel von einem Fahrer mit einem Fahrerwunsch für einen Lenkwinkel (α) beaufschlagt werden kann und ein Feedback-Signal (51) an das Lenkeingabemittel als Reaktion auf den Fahrerwunsch und einen Fahrzustand des Kraftfahrzeugs ausgibt,
- eine Einrichtung zur Signalübertragung, die den Fahrerwunsch (52) an die Ansteuereinheit (60) übermittelt,
- wobei die Ansteuereinheit (60) den Lenksteller (6) ansteuert, um den Fahrerwunsch in eine Auslenkung der gelenkten Räder (7) zu transformieren,
- wobei eine Feedback-Aktuator-Monitoreinheit (10) vorgesehen ist, die den Feedback-Aktuator (4) überwacht und eine Fehlfunktion des Feedback-Aktuators (4) als Fehlerfall (X) detektiert, **dadurch gekennzeichnet, dass**
- die Feedback-Aktuator-Monitoreinheit (10) dazu eingerichtet ist,
- im Fehlerfall (X) das Feedback-Signal (51) an das Lenkeingabemittel (3) innerhalb einer ersten Zeitspanne (t1) kontinuierlich auf Null zu reduzieren, sowie
- die Signalübertragung zwischen Lenkeingabemittel (3) und Lenksteller (6) zu reduzieren und/oder
- die Signalübertragung für eine zweite Zeitspanne (t2) zu unterbrechen und/oder
- den in der Signalübertragung übermittelten Fahrerwunsch (52) nur als reduzierte Größe zu übertragen und/oder
- den in der Signalübertragung übermittelten Fahrerwunsch (52) nicht in die Transformation zur Bestimmung der Änderung der Auslenkung der Räder (7) in der Ansteuereinheit (60) zu übertragen.

9. Steer-by-Wire-Lenksystem (1) nach Anspruch 8, **dadurch gekennzeichnet, dass** der Lenksteller (6) mittels eines Zahnstangen-Lenkgetriebes (8) auf die gelenkten Räder (7) wirkt.

## Claims

1. A method for controlling a steer-by-wire steering system (1) for a motor vehicle, comprising:
- an electronically controllable steering actuator (6) which acts on the steered wheels (7),
- an actuation unit (60),
- a feedback actuator (4) to which a driver's request (52) for a steering angle (α) can be applied by a driver using a steering input means, and which outputs a feedback signal (51) to the steering input means as a reaction to the driver's request (52) and a driving state of the motor vehicle,
- a signal transmission which transfers the driver's request (52) to the actuation unit (60),
- wherein the actuation unit (60) actuates the steering actuator (6) in order to transform the driver's request into a deflection of the steered wheels (7),
- wherein a feedback actuator monitor unit (10) is provided which detects a malfunction of the feedback actuator (4) as a fault situation (X),
**characterized in that** in the fault situation (X):
- the feedback signal (51) to the steering input means (3) is continuously reduced to zero within a first time period (t1), and
- the signal transmission is reduced, and/or
- the signal transmission is interrupted for a second time period (t2), and/or
- the driver's request (52) which is transferred in the signal transmission is only included as a reduced variable in the transformation for determining the change in the deflection of the wheels (7), and/or
- the driver's request (52) which is transferred in the signal transmission, for the second time period (t2), is not included in the transformation for determining the change in the deflection of the wheels (7).

2. The method as claimed in claim 1, **characterized in that** the following method steps are also provided:
- determining a defined steering angle status on the basis of a steering angle (α) and a steering angle speed which are applied by the driver during travel,
- transmitting the defined steering angle status to the actuation unit (60), and
- actuating the steering actuator (6) on the basis of the defined steering angle status.

3. The method as claimed in claim 1 or 2, **characterized in that** the following method steps are also provided:
- measuring and storing a vehicle velocity (v), and/or
- measuring and storing the steered angle (β) of the steered wheels, and/or
- measuring and storing a position (12) of the steering actuator (6), and/or
- measuring or estimating a force of the steering actuator (6), wherein the force of the steering actuator is stored,
- wherein the stored values are stored for a third time period (t3) and
- actuating the steering actuator (6) on the basis:
- of the stored vehicle velocity (v) and/or of the stored steered angle (β) and/or of the stored position of the steering actuator (6) and/or of the stored or estimated force of the steering actuator (6).

4. The method as claimed in one of the preceding claims 2 or 3, **characterized in that** in the fault situation (X) the following steps are provided:
- determining the feedback signal and/or the driver's request on the basis of the steering angle status which is determined before the fault situation (X) and/or the measured vehicle velocity (v) and/or the measured steered angle of the measured position of the steering actuator and/or of the measured or estimated force of the steering actuator.

5. The method as claimed in one of the preceding claims, **characterized in that** the second time period is shorter than the first time period.

6. The method as claimed in one of the preceding claims, **characterized in that**
- after the expiry of the first time period (t1), the feedback actuator is actuated by means of the actuation unit (60).

7. The method as claimed in one of the preceding claims, **characterized in that** the driving state of the motor vehicle corresponds to cornering.

8. A steer-by-wire steering system (1) for a motor vehicle, comprising:
- an electronically controllable steering actuator (6) which acts on the steered wheels (7),
- an actuation unit (60),
- a feedback actuator (4) to which a driver's request for a steering angle (α) can be applied by a driver using a steering input means, and which outputs a feedback signal (51) to the steering input means as a reaction to the driver's request and a driving state of the motor vehicle,
- a signal transmission device which transfers the driver's request (52) to the actuation unit (60),
- wherein the actuation unit (60) actuates the steering actuator (6) in order to transform the driver's request into a deflection of the steered wheels (7),
- wherein a feedback actuator monitor unit (10) is provided which monitors the feedback actuator (4) and detects a malfunction of the feedback actuator (4) as the fault situation (X), **characterized in that**
- the feedback actuator monitor unit (10) is configured
- to reduce, in the fault situation (X), the feedback signal (51) to the steering input means (3) continuously to zero within a first time period (t1), and
- to reduce the signal transmission between the steering input means (3) and the steering actuator (6), and/or
- to interrupt the signal transmission for a second time period (t2), and/or
- to transmit the driver's request (52), transferred in the signal transmission, only as a reduced variable, and/or
- not to transmit the driver's request (52), transferred in the signal transmission, into the transformation for determining the change in the deflection of the wheels (7) in the actuation unit (60).

9. The steer-by-wire steering system (1) as claimed in claim 8, **characterized in that** the steering actuator (6) acts on the steered wheels (7) by means of a rack-and-pinion steering gear (8).

## Revendications

1. Procédé de commande d'un système de direction à commande par câble électrique (1) pour un véhicule automobile, comprenant :
- un organe final de direction (6) à régulation électronique qui agit sur les roues directrices (7),
- une unité de pilotage (60),
- un actionneur à rétroaction (4), qui peut être sollicité par un conducteur avec un souhait de conducteur (52) pour un angle de braquage (α) par le biais d'un moyen d'entrée de direction et délivre en sortie un signal de rétroaction (51) au moyen d'entrée de direction en tant que réaction au souhait de conducteur (52) et un état de déplacement du véhicule automobile,
- une transmission de signal, qui communique le souhait de conducteur (52) à l'unité de pilotage (60),
- l'unité de pilotage (60) pilotant l'organe final de direction (6) en vue de transformer le souhait de conducteur en une déviation des roues directrices (7),
- une unité de surveillance d'actionneur à rétroaction (10) étant présente, laquelle détecte un défaut de fonctionnement de l'actionneur à rétroaction (4) en tant que cas de défaut (X),
**caractérisé en ce que** dans un cas de défaut (X) :
- le signal de rétroaction (51) vers le moyen d'entrée de direction (3) est continuellement réduit à zéro au sein d'un premier intervalle de temps (t1), et aussi
- la transmission de signal est réduite et/ou
- la transmission de signal est interrompue pendant un deuxième intervalle de temps (t2) et/ou
- le souhait de conducteur (52) communiqué dans la transmission de signal n'est inclus que sous la forme d'une grandeur réduite dans la transformation destinée à déterminer la modification de la déviation des roues (7) et/ou
- le souhait de conducteur (52) communiqué dans la transmission de signal pendant le deuxième intervalle de temps (t2) n'est pas inclus dans la transformation destinée à déterminer la modification de la déviation des roues (7).

2. Procédé selon la revendication 1, **caractérisé en ce qu'**il comprend en outre les étapes de procédé suivantes :
- identification d'un état d'angle de braquage défini en se basant sur un angle de braquage (α) sollicité par le conducteur pendant le déplacement et une vitesse angulaire de braquage,
- transmission de l'état d'angle de braquage défini à l'unité de pilotage (60) et
- pilotage de l'organe final de direction (6) sur la base de l'état d'angle de braquage défini.

3. Procédé selon la revendication 1 ou 2, **caractérisé en ce qu'**il comprend en outre les étapes de procédé suivantes :
- mesure et mémorisation de la vitesse du véhicule (v) et/ou
- mesure et mémorisation de l'angle dévié (β) des roues directrices et/ou
- mesure et mémorisation d'une position (12) de l'organe final de direction (6) et/ou
- mesure ou estimation d'une force de l'organe final de direction (6), la force de l'organe final de direction étant mémorisée,
- les valeurs mémorisées étant mémorisées pendant un troisième intervalle de temps (t3) et
- pilotage de l'organe final de direction (6) en se basant sur :
- la vitesse du véhicule (v) mémorisée et/ou l'angle dévié (β) mémorisé et/ou la position mémorisée de l'organe final de direction (6) et/ou de force mémorisée ou estimée de l'organe final de direction (6).

4. Procédé selon l'une des revendications précédentes 2 et 3, **caractérisé en ce qu'**en cas de défaut (X), les étapes suivantes sont prévues :
- détermination du signal de rétroaction et/ou du souhait de conducteur sur la base de l'état d'angle de braquage identifié avant le cas de défaut (X) et/ou de la vitesse du véhicule (v) mesurée et/ou de l'angle dévié mesuré de la position mesurée de l'organe final de direction et/ou de la force mesurée ou estimée de l'organe final de direction.

5. Procédé selon l'une des revendications précédentes, **caractérisé en ce que** le deuxième intervalle de temps est plus court que le premier intervalle de temps.

6. Procédé selon l'une des revendications précédentes, **caractérisé en ce qu'**après écoulement du premier intervalle de temps (t1), l'actionneur à rétroaction est piloté par le biais de l'unité de pilotage (60).

7. Procédé selon l'une des revendications précédentes, **caractérisé en ce que** l'état de déplacement du véhicule automobile correspond à un déplacement en virage.

8. Système de direction à commande par câble électrique (1) pour un véhicule automobile, comprenant :
- un organe final de direction (6) à régulation électronique qui agit sur les roues directrices (7),
- une unité de pilotage (60),
- un actionneur à rétroaction (4), qui peut être sollicité par un conducteur avec un souhait de conducteur pour un angle de braquage (α) par le biais d'un moyen d'entrée de direction et délivre en sortie un signal de rétroaction (51) au moyen d'entrée de direction en tant que réaction au souhait de conducteur et un état de déplacement du véhicule automobile,
- un dispositif de transmission de signal, qui communique le souhait de conducteur (52) à l'unité de pilotage (60),
- l'unité de pilotage (60) pilotant l'organe final de direction (6) en vue de transformer le souhait de conducteur en une déviation des roues directrices (7),
- une unité de surveillance d'actionneur à rétroaction (10) étant présente, laquelle surveille l'actionneur à rétroaction (4) et détecte un défaut de fonctionnement de l'actionneur à rétroaction (4) en tant que cas de défaut (X), **caractérisé en ce que**
- l'unité de surveillance d'actionneur à rétroaction (10) est conçue pour
- en cas de défaut (X), réduire continuellement à zéro le signal de rétroaction (51) vers le moyen d'entrée de direction (3) au sein d'un premier intervalle de temps (t1), et aussi
- réduire la transmission de signal entre le moyen d'entrée de direction (3) et l'organe final de direction (6) et/ou
- interrompre la transmission de signal pendant un deuxième intervalle de temps (t2) et/ou
- ne transmettre le souhait de conducteur (52) communiqué dans la transmission de signal que sous la forme d'une grandeur réduite et/ou
- ne pas transmettre dans l'unité de pilotage (60) le souhait de conducteur (52) communiqué dans la transmission de signal dans la transformation destinée à déterminer la modification de la déviation des roues (7).

9. Système de direction à commande par câble électrique (1) selon la revendication 8, **caractérisé en ce que** l'organe final de direction (6) agit sur les roues directrices (7) au moyen d'un mécanisme de direction à crémaillères (8).
